# EUROPÄISCHE PATENTSCHRIFT

(11) **EP 3 413 720 B1**
(45) Veröffentlichungstag und Bekanntmachung des Hinweises auf die Patenterteilung: **10.06.2020**
(21) Anmeldenummer: 17704239.7
(22) Anmeldetag: 09.02.2017
(51) Int. Cl.: A22C 11/00

(54) **VORRICHTUNG ZUM TRENNEN VON EINZELNEN ÜBER ABDREHSTELLEN VONEINANDER GETRENNTEN WÜRSTEN**
DEVICE FOR SEPARATING INDIVIDUAL SAUSAGES SEPARATED FROM ONE ANOTHER BY TWIST POINTS
DISPOSITIF DE SÉPARATION DE SAUCISSES INDIVIDUELLES SÉPARÉES LES UNES DES AUTRES PAR DES SITES DE TORSION

(30) Priorität: 11.02.2016 DE 102016102372
(43) Veröffentlichungstag der Anmeldung: 19.12.2018
(73) Patentinhaber: Inotec GmbH Maschinenentwicklung und Vertrieb, 72770 Reutlingen (DE)
(72) Erfinder: DOMLATIL, Miroslav, 72766 Reutlingen (DE)
(74) Vertreter: Patentanwälte und Rechtsanwalt Weiß, Arat & Partner mbB
(86) Internationale Anmeldenummer: PCT/EP2017/052801
(87) Internationale Veröffentlichungsnummer: WO 2017/137464

(56) Entgegenhaltungen:
- DE-C1- 3 535 960
- US-A- 5 857 902
- US-A- 6 106 878
- US-A1- 2013 313 072

## Beschreibung

Die Erfindung betrifft eine Vorrichtung zum Trennen von einzelnen über Abdrehstellen voneinander getrennten Würsten an einer Schneidstelle, wobei der Schneidstelle ein Sensor zum Erfassen der Abdrehstelle vorgeschaltet ist.

### Stand der Technik

Würste werden heute so hergestellt, daß ein Darm, sei es Natur- oder Kunstdarm, mit dem entsprechenden Wurstbrät in Wurstportionen abgefüllt wird. Zwischen den einzelnen Portionen erfolgt ein Drehen des Darms und/oder ein Einsetzen von Clipsen, durch welche die einzelnen Würste voneinander abgeteilt werden. Hierdurch entsteht eine Abdrehstelle, von der später, beispielsweise zum automatischen Verpacken einer bestimmten Anzahl von Würsten, diese Würste abgeschnitten werden müssen.

Vorrichtungen zum Abtrennen von Würsten eines Wurststranges umfassend einen Sensor zur Erfassung der Schneidstelle sind bekannt, diesbezüglich sei beispielsweise auf die DE 35 35 960 C1, die US 6 106 878 A sowie auf die US 5 857 902 A verwiesen.

Im Laufe der Jahre ist die Technik weiterentwickelt worden und zeigt in der DE 43 07 637 C2 eine Vorrichtung, mittels der auf einfache Weise ein absolut exaktes Trennen der Würste von einem Wurstband oder einer Wurstkette und auch ein automatisches Zuführen der getrennten Würste zu einer Verpackungseinrichtung in den Taktzeiten dieser Verpackungseinrichtung erfolgt. In dieser Erfindung wird beschrieben, daß ein Sensor einen Infrarot-Lichtvorhang erzeugt. Durch einen solchen Infrarot-Lichtvorhang kann der Sensor wesentlich genauer die Abdrehstelle zwischen zwei Würsten erfassen und die Position an die Schneidstelle weiterleiten.

Durch diese Neuerung konnte eine enorme Steigerung im Produktionsprozess erwirkt werden, was dazu eine große Auswirkung auf die Wirtschaftlichkeit eines Unternehmens hat.

### Aufgabe

Die Aufgabe der vorliegenden Erfindung ist, technisch noch ausgereifter und präziser zu arbeiten und die Geschwindigkeit des Produktionsprozesses zu erhöhen.

### Lösung der Aufgabe

Zur Lösung dieser Aufgabe führt, daß der Schneidstelle mindestens ein weiterer Sensor vorgeschaltet ist, welcher parallel zum Sensor verläuft und näher an der Schneidstelle sitzt, als der Sensor, wobei die Sensoren jeweils einen Infrarot-Lichtmantel erzeugen und wobei die Sensoren einzeln betreibbar sind.

Durch einen weiteren Sensor, kann die Abdrehstelle der Würste noch genauer ermittelt werden und somit ein präziser Schnitt bzw. eine präzise Trennung der Würste erfolgen. Er kann alleine, auch ohne den ersten Sensor zum Einsatz kommen. Dies gilt vor allem für kürzere Wurstketten. Dabei wird dieser zweite Sensor bevorzugt dichter an die Schneidstelle gesetzt.

In einer anderen Ausführungsform der Erfindung kann der zweite Sensor auch zusammen mit dem ersten Sensor arbeiten. Er erfasst die Abdrehstelle nochmals und gleicht die Daten mit dem vorangehenden ersten Sensor ab, um eine perfekte Genauigkeit des Schnitts zu ermöglichen.

Ein Vorteil ist somit, dass beide Sensoren unabhängig voneinander oder aber auch in Kombination betrieben werden können. Je nach Wurstkette wird eine entsprechende Einstellung vorgenommen, um eine genau Position der Abdrehstelle erfassen zu können. Eine hohe Präzision und somit hohe Schneidegenauigkeit wird damit gewährleistet. Damit wird weniger Ausschuss durch Fehlschnitte produziert und somit die Wirtschaftlichkeit erhöht.

Außerdem löst der zweite Sensor das Problem, wenn die Würste an einer Wurstkette einen unterschiedlichen Durchmesser aufweisen. Folgt beispielsweise eine Wurst mit einem geringeren Durchmesser auf eine Wurst mit einem höheren Durchmesser, wird diese Wurst während dem Schneiden der Wurst mit dem höheren Durchmesser nicht fest zwischen den beiden Transportbändern gehalten, sondern beim Schneiden der Abdrehstelle zwischen der Wurst mit dem höheren Durchmesser und der Wurst mit dem geringeren Durchmesser nach vorne gezogen. Dies bedeutet aber, dass die nachfolgende Abdrehstelle zwischen der Wurst mit dem geringeren Durchmesser und der nachfolgenden Wurst nicht mehr stimmt. Hierfür kommt der zweite Sensor zum Einsatz, um eine genau Position der Abdrehstelle zu ermitteln.

Der zweite Sensor sitzt, genau wie der erste Sensor, quer zur Lauffläche und somit parallel zum ersten Sensor. Nur so kann eine Wurstkette beide Sensoren durchlaufen.

Die Sensoren erzeugen einen Infrarot-Lichtmantel, der die Abdrehstelle der Wurstkette abscannt und die Position der Abdrehstelle an die Schneidstelle weiterleitet. Der Infrarot-Lichtmantel nimmt präzise die Abdrehstellen der Wurstkette auf und diese können somit genauestens geschnitten werden. Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine Draufsicht auf eine erfindungsgemäße Vorrichtung zum Trennen von Würsten;
**Figur 2** eine Draufsicht auf einen vergrößerten Ausschnitt der Vorrichtung gemäß Figur 1.

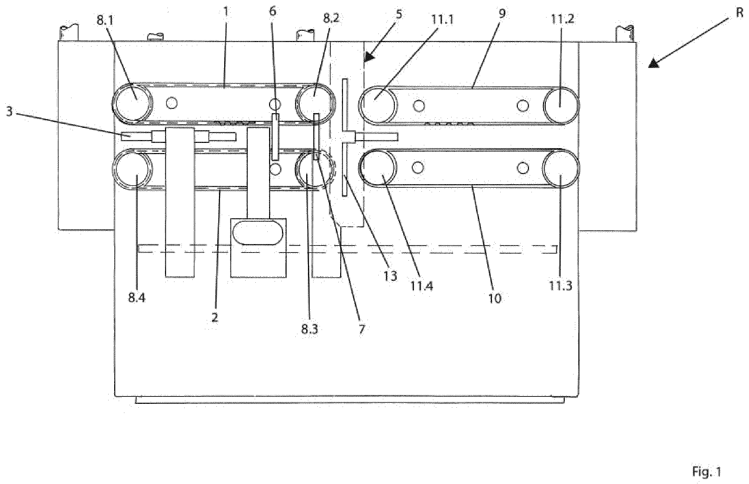

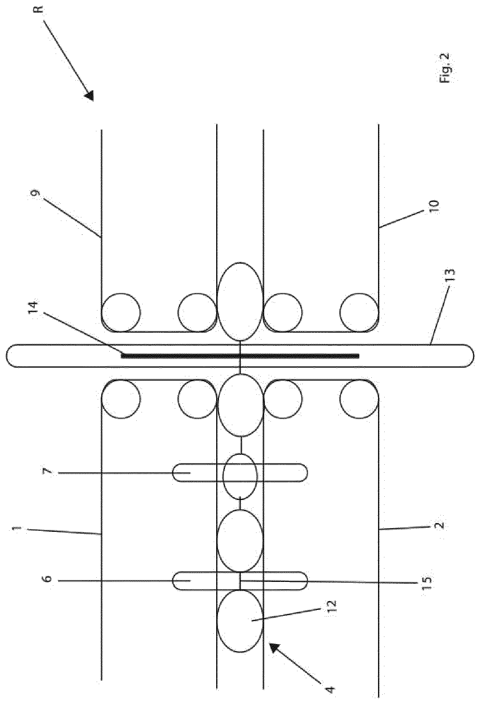

Gemäß Figur 1 weist eine erfindungsgemäße Vorrichtung R zum Trennen von Würsten 12 (siehe Figur 2), die als Wurstkette 4 aneinandergereiht und durch eine Abdrehstelle getrennt sind, zwei Transportbänder 1 und 2 auf, welche in einem veränderbaren Abstand voneinander angeordnet und als endlose Doppelzahnriemen ausgebildet sind. Sie laufen um Umlenkrollen 8.1 - 8.4.

Des Weiteren wird ein Niederhalter 3 gezeigt, der die Wurstkette 4 in der Spur halten soll. Zwischen dem Niederhalter 3 und einer gestrichelt angedeuteten Schneidstelle 5 ist, gemäß Figur 1, ein Sensor 6 und ein Sensor 7 angeordnet.

Die Sensoren 6 und 7 sind der Schneidstelle 5 vorgeschaltet. Sie steuern einen nicht weiter gezeigten Servomotor für ein Schneidmesser 14 an. Dabei ist der Sensor 6 etwa 100 mm vor einem Schlitz 13, durch welchen das Schneidmesser 14 ein- und austritt, angeordnet, damit ausreichend Zeit vorhanden ist, um ein Signal zum Schneiden an das Messer 14 weiterzuleiten. Der Schlitz 13 verläuft quer zur Förderrichtung der Wurstkette 4 und ist nach dem Transportbandpaar 1 und 2 angeordnet.

Die Sensoren 6 und 7 sind ebenfalls quer zur Förderrichtung einer Wurstkette 4 angeordnet. Ein in der DE 43 07 637 C2 schon beschriebener Infrarot-Sender der Sensoren 6 und 7 erzeugt durch Leuchtdioden eine Vielzahl von Strahlen eine Lichtschranke, welche von der Wurst 12 und insbesondere der Abdrehstelle 15 zwischen den Würsten durchfahren wird.

Auf die Schneidstelle 5 folgen zwei weitere Transportbänder 9 und 10, welche als einfache Zahnriemen ausgebildet sind. Auch hier sind entsprechende Umlenkrollen 11.1 - 11.4 vorgesehen. Diese Transportbänder 9 und 10 dienen dazu, die in der Schneidstelle 5 von der Wurstkette 4 getrennten Würste 12 einzeln weiterzutransportieren.

Die Transportbandpaare 1/2 und 9/10 können mit gleicher oder mit unterschiedlicher Geschwindigkeit angetrieben werden. Weist das Transportbandpaar 9/10 eine geringfügig höhere Geschwindigkeit gegenüber dem Transportbandpaar 1/2 auf, wird die Wurstkette 4 im Bereich der Schneidstelle 5 etwas gespannt so ein noch gesicherterer Schnitt erfolgen kann.

Diverse weitere Funktionen und Bauteile wurden in der DE 43 07 637 C2, auf die besonders Bezug genommen und die in diese Schrift integriert wird, schon aufgeführt und werden hier nicht weiter beschrieben.

Die Funktionsweise der vorliegenden Erfindung ist Folgende:
Eine Wurstkette 4 wird in die Vorrichtung R zum Trennen von Würsten 12 eingefädelt. Hier wird sie von dem Transportbandpaar 1 und 2 erfasst und weitergeleitet. Wenn die Wurst 12 beispielsweise eine Länge von ca. 70 mm aufweist, kann diese gut von den Transportbändern 1 und 2 gehalten werden und der Sensor 6 erfasst die Abdrehstelle 15 zwischen zwei Würsten 12, errechnet deren Länge und gibt ein Signal etwa für die Mitte der Abdrehstelle an das Messer 14 weiter, welches die Wurstkette 4 so genau wie möglich an der Abdrehstelle 15 schneidet. Dies geschieht zum Beispiel 30 Mal pro Sekunde bei einer Bandgeschwindigkeit von 2,1 m/s. Hierzu ist eine enorme Rechnerleistung erforderlich, um das an der Abdrehstelle gescannte Bild auszuwerten, die Mitte der Abdrehstelle auszurechnen und dem Schneidmesser den Schneidimpuls zu geben. Zusätzlich muss das Messer auch noch mechanisch die Schneidbewegung schaffen.

Bei kleineren Würsten 12 wie beispielsweise Minisalamis, die beispielsweise nur eine Länge von ca. 30 mm aufweisen, kommt es bei diesen Einstellungen zu Fehlschnitten, da die Geschwindigkeit zu hoch ist und ebenfalls die Anzahl der Abdrehstellen, welche den Sensor 6 durchlaufen. D.h., die Bandgeschwindigkeit muss bei Würsten mit geringerer Länge vermindert werden. Da sich die Abdrehstelle 15 langsamer bewegt, ist es möglich, den Abstand des Sensors 7 zur Schneidstelle 5 wesentlich zu verringern.

Ferner gibt es große Probleme, wenn die Würste an einer Wurstkette unterschiedliche Durchmesser aufweisen. Folgt zum Beispiel eine Wurst mit einem geringeren Durchmesser auf eine Wurst mit einem höheren Durchmesser, wird diese Wurst während dem Schneiden der Wurst mit dem höheren Durchmesser nicht fest zwischen den beiden Transportbändern gehalten, sondern beim Schneiden der Abdrehstelle zwischen der Wurst mit dem höheren Durchmesser und der Wurst mit dem geringeren Durchmesser nach vorne gezogen. Dies bedeutet aber, dass die nachfolgende Abdrehstelle zwischen der Wurst mit dem geringeren Durchmesser und der nachfolgenden Wurst nicht mehr stimmt.

Erfindungsgemäß kommt hier auch der Sensor 7 zum Einsatz, der nochmals die Abdrehstelle erfasst und die Daten mit den Daten, die vom Sensor 6 ermittelt wurden, in Übereinstimmung bringt, sodass ein korrekter Schneidvorgang erfolgen kann.

**Bezugszeichenliste**

| | | | | | |
|---|---|---|---|---|---|
| 1 | Transportband | 34 | | 67 | |
| 2 | Transportband | 35 | | 68 | |
| 3 | Niederhalter | 36 | | 69 | |
| 4 | Wurstkette | 37 | | 70 | |
| 5 | Schneidstelle | 38 | | 71 | |
| 6 | Sensor | 39 | | 72 | |
| 7 | Sensor | 40 | | 73 | |
| 8 | Umlenkrollen | 41 | | 74 | |
| 9 | Transportband | 42 | | 75 | |
| 10 | Transportband | 43 | | 76 | |
| 11 | Umlenkrollen | 44 | | 77 | |
| 12 | Würste | 45 | | 78 | |
| 13 | Schlitz | 46 | | 79 | |
| 14 | Messer | 47 | | | |
| 15 | Abdrehstelle | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Trennen von einzelnen über Abdrehstellen (15) voneinander getrennten Würsten (12) an einer Schneidstelle (5), wobei der Schneidstelle (5) ein Sensor (6) zum Erfassen der Abdrehstelle (15) vorgeschaltet ist,
wobei der Schneidstelle (5) mindestens ein weiterer Sensor (7) vorgeschaltet ist, welcher parallel zum Sensor (6) verläuft und näher an der Schneidstelle (5) sitzt, als der Sensor (6), wobei die Sensoren (6,7) jeweils einen Infrarot-Lichtmantel erzeugen , **dadurch gekennzeichnet, dass** die Sensoren (6,7) einzeln betreibbar sind.

2. Vorrichtung nach Anspruch 1, **dadurch gekennzeichnet, dass** beide Lichtvorhänge der Sensoren (6,7) in Kombination verwendbar sind.

3. Verfahren zum Trennen von einzelnen über Abdrehstellen (15) voneinander getrennten Würsten (12) an einer Schneidstelle (5), wobei die Abdrehstelle (15) zunächst von einem ersten Sensor (6) erfasst wird, **dadurch gekennzeichnet, dass**
die Abdrehstelle (15) anschliessend von einem zweiten Sensor (7) nochmals erfasst wird, wobei dieser zweite Sensor (7) näher an der Schneidstelle (5) angeordnet ist als der erste Sensor (6), wobei Daten, welche vom zweiten Sensor (7) erfasst werden, mit Daten abgeglichen werden, welche der erste Sensor (6) erfasst hat, um eine genaue Position der Abdrehstelle (15) zu erfassen.

## Claims

1. Device for separating individual sausages (12) separated from one another by twist points (15) at a cutting point (5), a sensor (6) for detecting the twist point (15) being arranged upstream of the cutting point (5), in that at least one further sensor (7) is arranged upstream of the cutting point (5), which sensor runs parallel to the sensor (6) and is located closer to the cutting point (5) than the sensor (6), the sensors (6, 7) each producing an infrared light jacket,
**characterised in that**
the sensors (6, 7) are individually operable.

2. Device according claim 1, **characterised in that** both light curtains of the sensors (6, 7) are usable in combination.

3. Method for separating individual sausages (12) separated from one another by means of twist points (15) at a cutting point (5), the twist point (15) first being detected by a first sensor (6),
**characterised in that**
the twist point (15) is subsequently detected again by a second sensor (7), this second sensor (7) being arranged closer to the cutting point (5) than the first sensor (6), data which are detected by the second sensor (7) being compared with data which the first sensor (6) has detected in order to detect an exact position of the twist point (15).

## Revendications

1. Dispositif de séparation de saucisses individuelles (12) séparées les unes des autres par des sites de torsion (15) en un point de coupe (5), dans lequel est connecté en amont du point de coupe (5) un capteur (6) destiné à détecter le site de torsion (15),
dans lequel est connecté en amont du point de coupe (5) au moins un autre capteur (7) qui s'étend de manière parallèle au capteur (6) et se trouve plus près du point de coupe (5) que le capteur (6), dans lequel les capteurs (6, 7) génèrent, chacun, une enveloppe de lumière infrarouge,
**caractérisé par le fait que**
les capteurs (6, 7) peuvent être actionnés individuellement.

2. Dispositif selon la revendication 1, **caractérisé par le fait que** les deux rideaux lumineux des capteurs (6, 7) peuvent être utilisées en combinaison.

3. Procédé de séparation de saucisses individuelles (12) séparées les unes des autres par des sites de torsion (15) en un point de coupe (5), dans lequel le site de torsion (15) est tout d'abord détecté par un premier capteur (6),
**caractérisé par le fait que**
le site de torsion (15) est ensuite à nouveau détecté par un deuxième capteur (7), où ce deuxième capteur (7) est disposé plus près du point de coupe (5) que le premier capteur (6), où les données qui sont détectées par le deuxième capteur (7) sont comparées aux données que le premier capteur (6) a détectées pour détecter une position exacte du site de torsion (15).
